# EUROPEAN PATENT SPECIFICATION

(11) **EP 4 135 467 B1**
(45) Date of publication and mention of the grant of the patent: **07.01.2026**
(21) Application number: 22189254.0
(22) Date of filing: 08.08.2022
(51) Int. Cl.: H04W 74/08

(54) **EARLY INDICATION BY USER EQUIPMENT**
FRÜHANZEIGE DURCH EIN BENUTZERGERÄT
INDICATION PRÉCOCE PAR UN ÉQUIPEMENT UTILISATEUR

(30) Priority: 13.08.2021 US 202163233147 P; 12.07.2022 US 202217812135
(43) Date of publication of application: 15.02.2023
(73) Proprietor: Samsung Electronics Co., Ltd., Suwon-si, Gyeonggi-do 16677 (KR)
(72) Inventor: BAE, Jung Hyun, San Jose, CA 95134 (US); HU, Liang, San Jose, CA 95134 (US); KARMOOSE, Mohammed, San Jose, CA 95134 (US); SARTORI, Philippe, San Jose, CA 95134 (US)
(74) Representative: Kuhnen & Wacker Patent- und Rechtsanwaltsbüro PartG mbB

(56) References cited:
- NORDIC SEMICONDUCTOR ASA: "On aspects related to reduced number of Rx branches", vol. RAN WG1, no. e-Meeting; 20210510 - 20210527, 11 May 2021 (2021-05-11), XP052006477, Retrieved from the Internet <URL:https://ftp.3gpp.org/tsg_ran/WG1_RL1/TSGR1_105-e/Docs/R1-2105883.zip R1-2105883_On aspects related to number of Rx antennas.docx> [retrieved on 20210511]
- MODERATOR (NTT DOCOMO ET AL: "FL summary #5 on RAN1 aspects for RAN2-led features for RedCap", vol. RAN WG1, no. e-Meeting; 20210510 - 20210527, 27 May 2021 (2021-05-27), XP052015838, Retrieved from the Internet <URL:https://ftp.3gpp.org/tsg_ran/WG1_RL1/TSGR1_105-e/Docs/R1-2106328.zip R1-2106328.docx> [retrieved on 20210527]
- ZTE ET AL: "Higher layer support of Reduced Capability NR devices", vol. RAN WG1, no. e-Meeting; 20210816 - 20210827, 6 August 2021 (2021-08-06), XP052033291, Retrieved from the Internet <URL:https://ftp.3gpp.org/tsg_ran/WG1_RL1/TSGR1_106-e/Docs/R1-2106845.zip R1-2106845 Higher layer support of RedCap UEs.doc> [retrieved on 20210806]
- APPLE INC: "On Higher Layer Support of Redcap Devices", vol. RAN WG1, no. e-Meeting; 20210816 - 20210827, 7 August 2021 (2021-08-07), XP052038636, Retrieved from the Internet <URL:https://ftp.3gpp.org/tsg_ran/WG1_RL1/TSGR1_106-e/Docs/R1-2107749.zip R1-2107749.docx> [retrieved on 20210807]
- NOKIA ET AL: "REDCAP UE early identification", vol. RAN WG2, no. Electronic; 20210816 - 20210827, 5 August 2021 (2021-08-05), XP052032502, Retrieved from the Internet <URL:https://ftp.3gpp.org/tsg_ran/WG2_RL2/TSGR2_115-e/Docs/R2-2108245.zip R2-2108245 REDCAP UE early identification.docx> [retrieved on 20210805]

## Description

### FIELD

One or more aspects of embodiments according to the present disclosure relate to wireless communications, and more particularly to a system and method for providing early indications.

### BACKGROUND

In a wireless system, a User Equipment (UE) may communicate with the network node (gNB) regarding various characteristics (e.g., capabilities) of the UE. In some cases, the UE may communicate certain characteristics to the gNB during the initial access procedure, and the gNB may use the information obtained in this manner during initial access.

It is with respect to this general technical environment that aspects of the present disclosure are related.

NORDIC SEMICONDUCTOR ASA: "On aspects related to reduced number of Rx branches", 3GPP DRAFT; R1-2105883, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE vol. RAN WG1, no. e-Meeting; 20210510 - 20210527 11 May 2021 (2021-05-11), XP052006477, discusses aspects related to reduced number of Rx branches.

MODERATOR (NTT DOCOMO ET AL: "FL summary #5 on RAN1 aspects for RAN2-led features for RedCap", 3GPP DRAFT; R1-2106328, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE vol. RAN WG1, no. e-Meeting; 20210510 - 20210527 27 May 2021 (2021-05-27), XP052015838, discusses RAN1 aspects for RAN2-led features for RedCap.

ZTE ET AL: "Higher layer support of Reduced Capability NR devices", 3GPP DRAFT; R1-2106845, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE vol. RAN WG1, no. e-Meeting; 20210816 - 20210827 6 August 2021 (2021-08-06), XP052033291, discusses Higher layer support of Reduced Capability NR devices.

### SUMMARY

The invention is defined by the independent claims. Embodiments are defined by the dependent claims.

### BRIEF DESCRIPTION OF THE DRAWINGS

These and other features and advantages of the present disclosure will be appreciated and understood with reference to the specification, claims, and appended drawings wherein:
FIG. 1 is a resource set diagram, according to an embodiment of the present disclosure;
FIG. 2 is a flow chart, according to an embodiment of the present disclosure;
FIG. 3 is a flow chart, according to an embodiment of the present disclosure;
FIG. 4 is a resource set diagram, according to an embodiment of the present disclosure;
FIG. 5A is a flow chart, according to an embodiment of the present disclosure;
FIG. 5B is a table of releases and features, according to an embodiment of the present disclosure;
FIG. 6 is a resource set diagram, according to an embodiment of the present disclosure;
FIG. 7 is a flow chart, according to an embodiment of the present disclosure;
FIG. 8A is a resource set diagram, according to an embodiment of the present disclosure;
FIG. 8B is a resource set diagram, according to an embodiment of the present disclosure;
FIG. 9A is a flowchart, according to an embodiment of the present disclosure; and
FIG. 9B is a block diagram of a system for wireless communications, according to an embodiment of the present disclosure.

### DETAILED DESCRIPTION

The detailed description set forth below in connection with the appended drawings is intended as a description of exemplary embodiments of a system and method for providing early indications provided in accordance with the present disclosure and is not intended to represent the only forms in which the present disclosure may be constructed or utilized. The description sets forth the features of the present disclosure in connection with the illustrated embodiments. It is to be understood, however, that the same or equivalent functions and structures may be accomplished by different embodiments that are also intended to be encompassed within the scope of the disclosure. As denoted elsewhere herein, like element numbers are intended to indicate like elements or features.

As part of an initial access procedure, a User Equipment (UE) may exchange messages with a network node (gNB), to establish a communication link. In some circumstances, the UE may also indicate certain aspects of the UE's capabilities to the gNB; this indicating of capabilities may allow the gNB to communicate efficiently with the UE. For example, during initial access, the UE may indicate whether it is a reduced capability (RedCap) UE (which may be described as indicating a RedCap capability), and whether is capable of transmitting Msg3 (of the initial access procedure) with repetitions (and requests that the gNB schedule such repetitions). The transmitting of Msg3 with repetitions may result in coverage enhancement (CovEnh). In the present disclosure, the indicating, by a UE, of the capability of a UE to transmit Msg3 with repetitions is equivalent to a UE indicating a capability for coverage enhancement, and is treated as equivalent to the making, by the UE of a request to the gNB to schedule Msg3 with repetitions. Further, in the present disclosure and claims, each of (i) whether a UE is a RedCap UE and (ii) whether a UE has the capability to send Msg3 with repetitions (which may also be referred to as Coverage Enhancement (CovEnh)), may be referred to as a "characteristic" of the UE.

Several methods are presented herein for the indicating, by a UE, during initial access, of being a reduced capability UE or of being capable of transmitting Msg3 with repetitions. For example, the indicating may be done implicitly, by the use of different Msg1 resource sets (preambles or Random Access Channel (RACH) Occasions (ROs)), or the indicating may be done explicitly, by the use of additional signaling. Although some examples are described in the context of a 4-step RACH procedure, analogous methods may be practiced, to similar or identical effect, in a 2-step RACH procedure.

As mentioned above, the use of different Msg1 resource sets may indicate a UE's capabilities implicitly. For example, a UE can be configured to indicate a RedCap capability using Msg1 resources. The RACH configuration may consist of two non-overlapping sets of Msg1 resources, where one set indicates RedCap capability. The set of resources may consist of (i) separate RACH occasions (ROs), (ii) a separate group of preambles within the same RO, or (iii) a combination of both. Similarly, a UE requesting Msg3 repetition scheduling during initial access may be configured to indicate such a request using Msg1 resources, in a manner which is similar to the procedure described above for indicating RedCap capability. As used herein, "implicitly" indicating a characteristic of the UE means (i) indicating the characteristic by the sending of a Msg1 preamble that corresponds to the characteristic, or (ii) sending a Msg1 preamble in an RO that corresponds to the characteristic, or (iii) sending a Msg1 preamble in an RO, when the combination of the preamble and the RO corresponds to the characteristic.

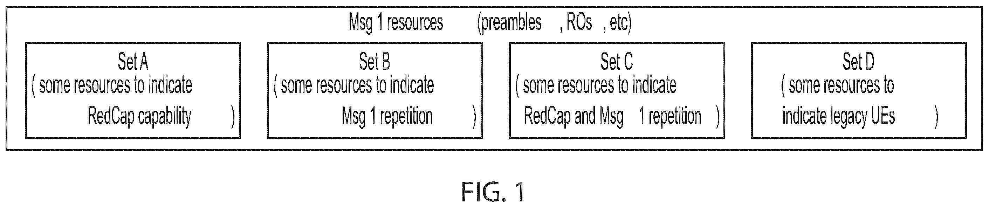

For example a RedCap UE may wish to indicate its RedCap capability and simultaneously indicate Msg3 repetition scheduling. The following options may be used to allow this operation. The UE may be configured with three sets of non-overlapping Msg1 resources, which may be referred to as Set A, Set B and Set C. Each set may consist of (i) separate ROs, (ii) a separate group of preambles with the same RO, or (iii) a combination of both. In addition, a Set D may be defined for non ReCap UEs with no Msg3 repetition. FIG. 1 shows the configuration of such sets in some embodiments.

A UE may then operate as follows. The UE transmits (i) Msg1 using resources from Set A if it wishes to indicate RedCap capability, (ii) Msg1 using resources from Set B if it wishes to indicate a request for Msg3 repetition scheduling (iii) Msg1 using resources from Set C if it wishes to indicate both RedCap capability and a request for Msg3 repetition scheduling. The determination of which set to use may be done based on UE capabilities. This may be done in two ways, referred to herein as a first embodiment and a second embodiment. In the first embodiment, three different UE capability combinations are defined. A capability referred to as X-1 identifies the UE as a RedCap UE, a capability referred to as X-a identifies a RedCap UE requiring Msg3 repetition, and a capability referred to as Y-1 identifies a UE requiring Msg3 repetition.

In this embodiment, a "RedCap and no CovEnh" UE indicates X-1. A "RedCap with CovEnh" UE indicates X-1 + X-a. A "CovEnh-only" UE indicates Y-1.

The gNB may allocate the resources as follows:
Set A: for UEs indicating X-1 only
Set C: for UEs indicating X-1 + X-a
Set B: for UEs indicating Y-1
Set D: for UEs indicating none of X-1, X-1 + X-a, and Y-1

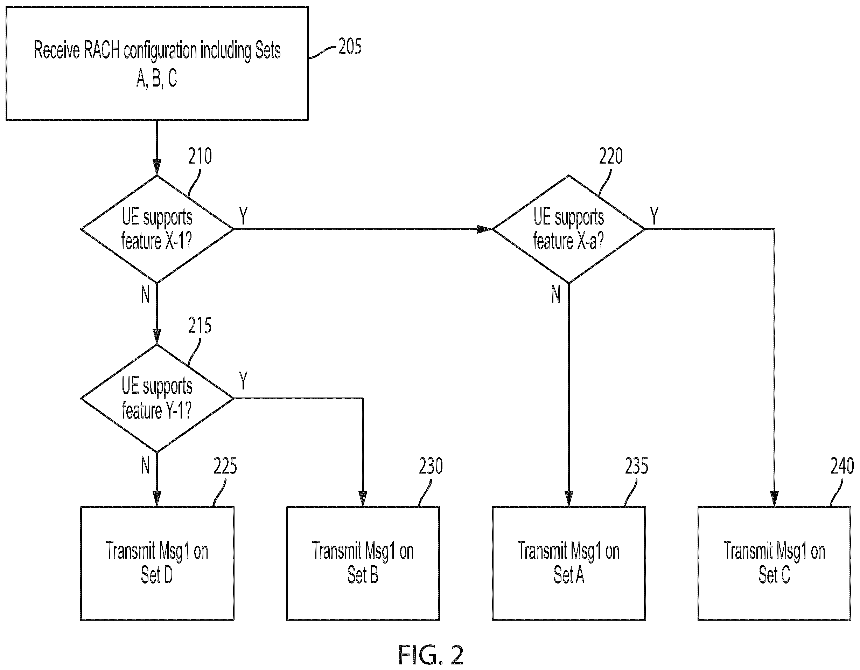

The procedure is shown in FIG. 2. At 205, the UE may receive a RACH configuration from the gNB, including sets A, B, and, C. Then, at 210, 215, and 220, (i) if the UE supports neither feature X-1 nor Y-1, it transmits Msg1, at 225, on set D; (ii) if the UE does not support feature X-1 and supports feature Y-1, it transmits Msg1, at 230, on set B; (iii) if the UE supports feature X-1 and does not support feature X-a, it transmits Msg1, at 235, on set A; and (iv) if the UE supports features X-1 and X-a, it transmits Msg1, at 240, on set C.

In some circumstances, multiple varieties of RedCap UEs may exist, each supporting different specific features. In such a case, the specific features that a RedCap UE supports may be indicated to the gNB, by dividing, for example, sets A and C into subsets, each subset corresponding to a different combination of features that the ReCap UE supports (or does not support).

In the second embodiment, two different UE capabilities are defined.

A capability referred to as X-1 identifies a RedCap UE, and a capability referred to as Y-1 identifies a UE capable of performing Msg3 repetition. The gNB may allocate the resources as follows:
Set A: for UEs indicating X-1 only
Set C: for UEs indicating X-1 + Y-1
Set B: for UEs indicating Y-1
Set D: for UEs indicating neither X-1 nor Y-1

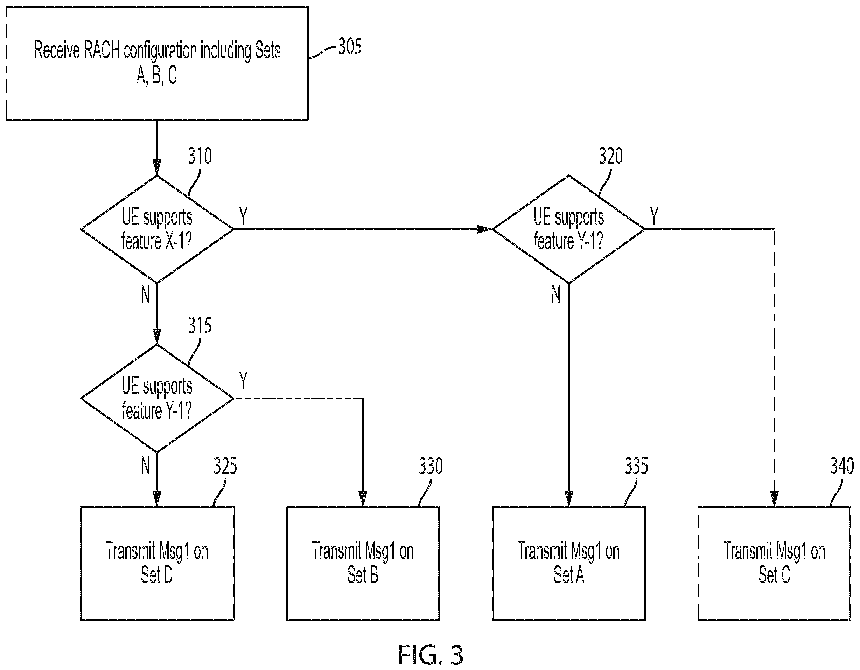

The procedure is shown in FIG. 3. At 305, the UE may receive a RACH configuration from the gNB, including sets A, B, and, C. Then, at 310, 315, and 320, (i) if the UE supports neither feature X-1 nor Y-1, it transmits Msg1, at 325, on set D; (ii) if the UE does not support feature X-1 and supports feature Y-1, it transmits Msg1, at 330, on set B; (iii) if the UE supports feature X-1 and does not support feature Y-1, it transmits Msg1, at 335, on set A; and (iv) if the UE supports features X-1 and Y-1, it transmits Msg1, at 340, on set C.

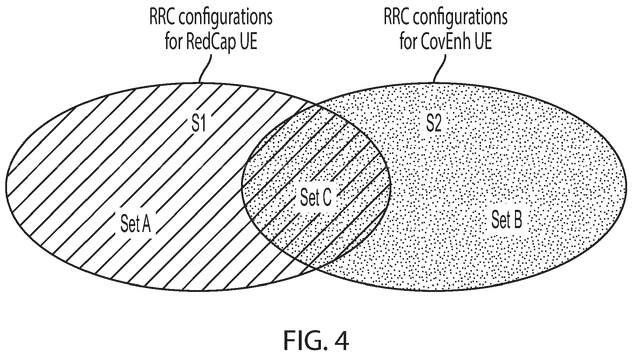

The configuration of RACH resource sets can be done explicitly by the gNB, by providing explicit Radio Resource Control (RRC) configurations for Set A, Set B and Set C. These RRC configurations may be transmitted, for example, in the Master Information Block (MIB) or System Information Block 1 (SIB-1) transmitted by the gNB. The configuration for set D may be the existing one for legacy Rel-16 UEs and may be defined in this manner to maintain backwards compatibility (where "Rel-16" refers to release 16 of the 5^{th} generation (5G) New Radio standard promulgated by the 3rd Generation Partnership Project (3GPP)). Alternatively, the gNB may provide RRC configurations for RedCap capability indication and Msg3 repetition request indication. These RRC configurations may provide a set of resources used for RedCap capability indication which may be referred to as S1, and a set of resources used for Msg3 repetition request indication which may be referred to as S2. Then, the three sets (A, B, and C) mentioned above may be determined as: (i) Set C is the intersection of S1 and S2, (ii) Set A consists of the resources in S1 except for those in Set C, and (iii) Set B consists of the resources in S2 except for those in Set C. FIG. 4 is a set diagram illustrating the process for determining Set A, Set B and Set C from the RRC configurations mentioned above.

Set B and Set C may be used for UEs with Msg3 repetition capability. If Set A is not explicitly configured, then a RedCap UE may be required to be able to infer Set A from other sets which are relevant for UEs with Msg3 repetition capability. For example, the gNB may communicate to the UE (i) the set B, (ii) the set C, and (iii) the union of the sets A, B, and C, and the UE may infer that the set A is the set of resources that are in the union and not in B or C. As another example, the gNB may communicate to the UE (i) the set C, (ii) the union of sets B and C, and (iii) the union of sets A, B and C. In this case, the UE may infer that the set C is the set of resources that are in the union of B and C and not in B, and the UE may infer that the set A is the set of resources that are in the union of the sets A, B, and C and not in B or C. Therefore, a UE with RedCap capability may be required to read or acknowledge some or all of the RRC configurations related to Msg3 repetitions (or coverage enhancement in general) even if the UE does not support Msg3 repetitions (or coverage enhancement in general). More specifically, in the second embodiment, (i) a UE supporting X-1 but not Y-1 may be required to be able to obtain and process the RRC message indicating RACH resource allocation for Y-1 (ii) a UE supporting Y-1 but not X-1 must be able to obtain and process the RRC message indicate RACH resource allocation for X-1, and (iii) two sets are indicated by the gNB: S1 for RedCap UEs, and S2 for Msg3 repetition UEs.

With these rules, an X-1 only UE (i.e., a UE that supports X-1 and not Y-1) selects resources from S1 that are not part of S2. A Y-1 only UE selects resources from S2 that are not part of S1. An X-1 + Y-1 UE selects resources from the intersection of S1 and S2. Alternatively, when the X-1 + Y-1 UE does not need Msg3 repetition, the UE may select as a 'regular' RedCap UE, i.e., it may select resources from S1 that are not part of S2. Non RedCap, non CovEnh UEs may select from set D using existing (Rel-16) procedures and signaling.

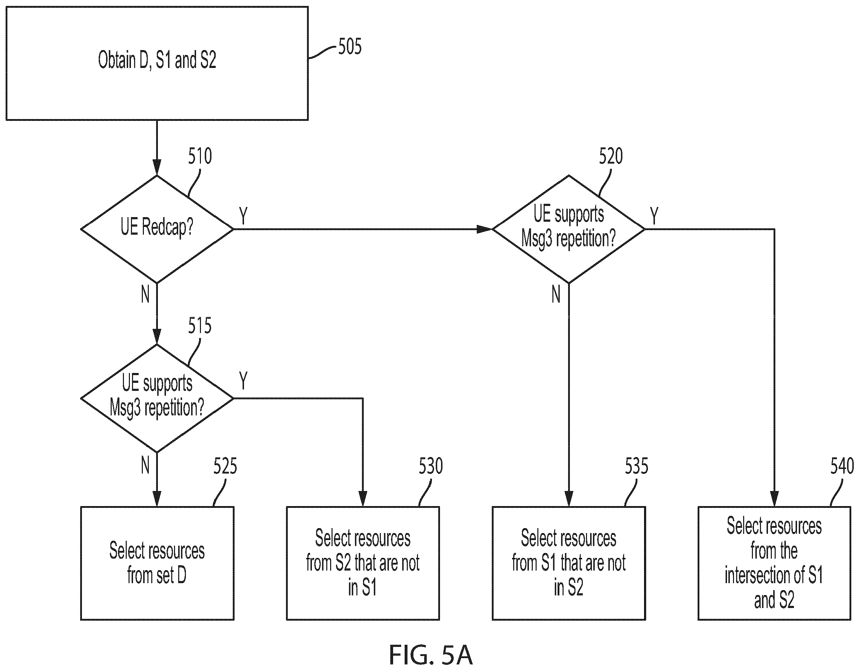

The operation is shown in FIG. 5A. At 505, the UE may receive a RACH configuration from the gNB, including sets D, S1, and S2. Then, at 510, 515, and 520, (i) if the UE is not a RedCap UE and does not support Msg3 repetition, it selects, at 525, resources from set D; (ii) if the UE is not a RedCap UE and does support Msg3 repetition, it selects, at 530, resources from S2 that are not in S1; (iii) if the UE is a RedCap UE and does not support Msg3 repetition, it selects, at 535, resources from S1 that are not in S2; and (iv) if the UE is a RedCap UE and does support Msg3 repetition, it selects, at 540, resources from the intersection of S1 and S2.

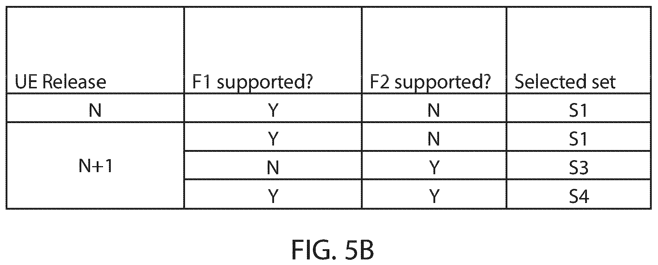

The implication of the second embodiment is that a RedCap UE may be required to be able to read the configuration for UEs requiring Msg3 repetition (and vice versa). This can be done if both features are standardized in the same release. However, if two features are standardized in two different releases, the solution may nonetheless work. For example, if a feature F1 is standardized in Rel-N and requires early identification (using a set S1), and a feature F2 is standardized in Rel-N+1 and requires early identification using a set S2, then set S2 may be further partitioned into disjoints set S3 and S4, with S3 for UEs supporting F2 only, and S4 for UEs supporting F1 and F2. The selection rules are shown in the table of FIG. 5B. With this solution, only the Rel-N+1 UE needs to be able to read the signaling.

In another embodiment, the gNB may use worst case assumptions in inferring the UE's capabilities from the set of resources used by the UE. For example, two capabilities may be defined: one for RedCap (X-1), one for Msg3 repetition (Y-1). The following four rules may then be used:
(i) A UE indicating Y-1 uses S2.
(ii) A UE indicating X-1 uses S1.
(iii) For any resources in S1, the gNB assumes that the UE is RedCap and needs Msg3 repetition.
(iv) A RedCap UE may always assume that the Msg3 repetition is present.

A dual solution (in which it is assumed that any UE requesting Msg 3 repetition is a RedCap UE) may be implemented in an analogous manner.

In some embodiments, additional signaling may be used to indicate a Msg3 repetition request, or a RedCap capability explicitly. A RedCap UE may use the Msg1 transmission to indicate RedCap capability by selection of the resources used to transmit Msg1, as discussed above. A RedCap UE may then indicate a request for Msg3 repetition scheduling via an additional uplink (UL) transmission. This transmission can occur before the reception of Msg2 or after the reception of Msg2. As used herein, "explicitly" indicating a characteristic of the UE means indicating the characteristic using a method that differs in any respect from a method consisting strictly of implicitly indicating the characteristic (as "implicitly" indicating is defined herein).

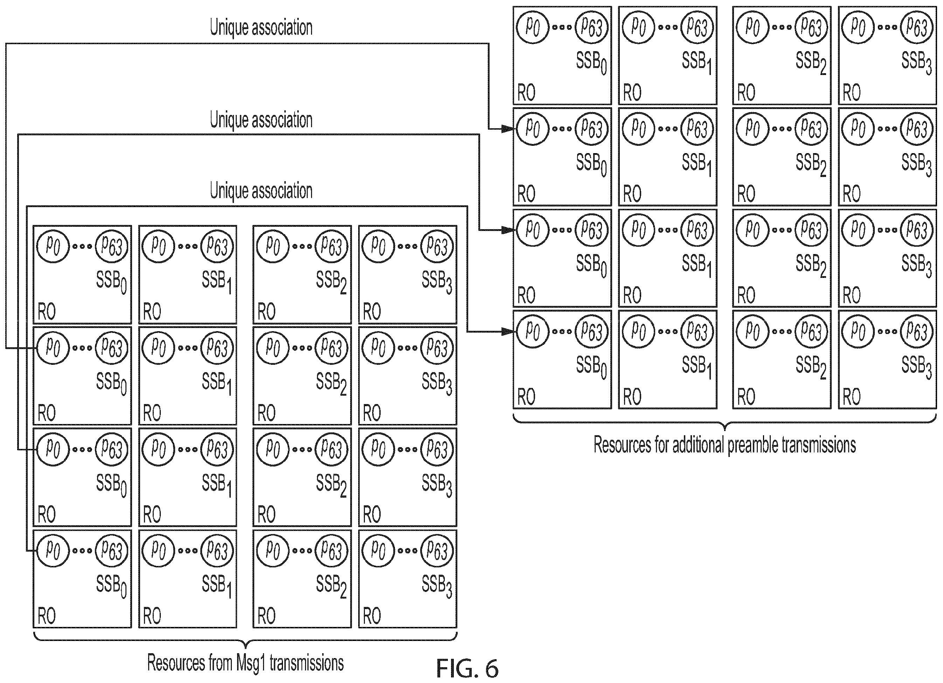

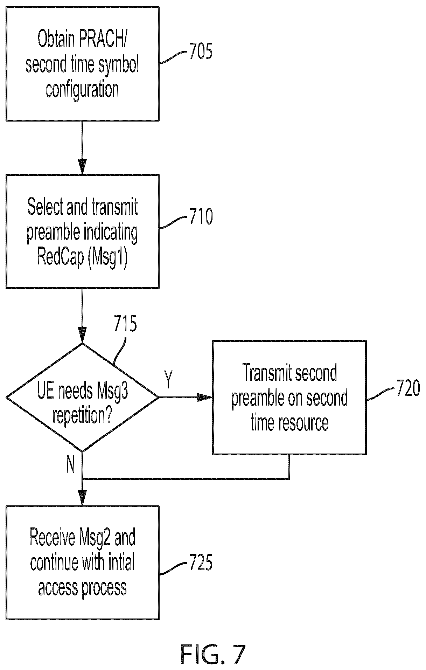

The additional UL transmission can be in the form of another preamble transmission. This additional preamble transmission may be transmitted using Msg1 resources from among the same set of resources configured for the transmission of the initial Msg1. Alternatively, the additional preamble transmission may be transmitted using Msg1 resources among a different set of resources configured separately from the resources configured for the initial Msg1. In this case, a one-to-one mapping may exist between the different resources configured for the transmission of each possible Msg1 transmission and the different resources configured for the transmission of each possible additional preamble transmission. For example, for each (preamble, RO) pair available for transmission of the initial Msg1, there may be a corresponding unique (preamble, RO) pair available for the transmission of a corresponding additional preamble. The gNB, upon receiving the initial Msg1 transmission and the corresponding additional preamble transmission, determines that the UE wishes to indicate RedCap capability as well as Msg3 repetition request. FIG. 6 shows the mapping between (i) the RACH resources for the initial Msg1 transmission and (ii) the corresponding additional preamble transmission. FIG. 7 shows the operation of the UE0. At 705, the UE may obtain a Physical RACH (PRACH) second time symbol configuration, and, at 710, it may select and transmit a preamble indicating that it is a RedCap UE. If, at 715, it is a UE that requires Msg3 repetition, then at 720, it transmits a second preamble on the second time resource. At 725 it may then receive Msg2 and continue with the initial acquisition process.

Regarding the configuration of resources for additional transmissions, the configuration may be independent of the configuration of resources for Msg1 transmissions, e.g., they may be configured entirely using separate RRC configurations. Alternatively, the configurations may be implicitly derived using the configuration of resources for Msg1 transmissions; this method reduces the RRC configuration overhead. An example of implicit configuration is that resources for additional preamble transmissions may be similar to the resources of Msg1 transmissions but with an additional time or frequency offset.

When configuring resources for additional preamble transmissions and determining preamble associations, the gNB may schedule the resources such that a UE performing transmissions of an initial Msg1 and an additional preamble transmission has sufficient time between the two transmissions to perform the necessary processing.

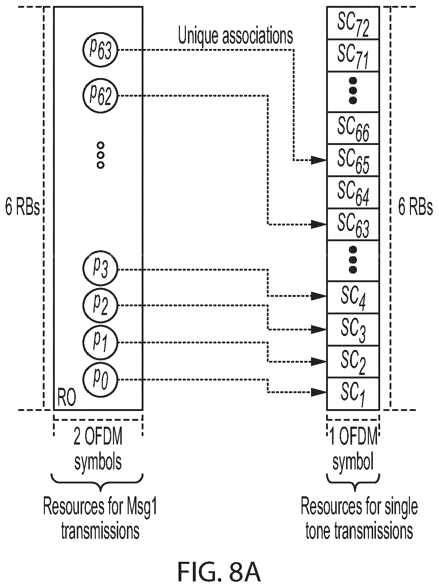

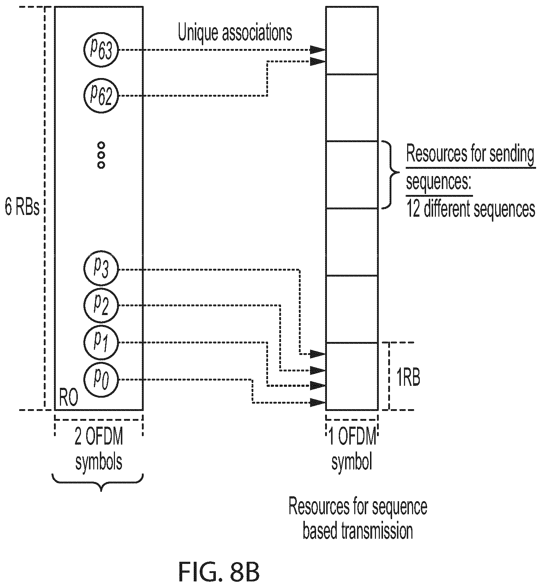

In some embodiments, the additional UL transmission may be in the form of a single-tone transmission. A single-tone transmission is defined as an unmodulated signal occupying one resource element (RE), i.e., one (orthogonal frequency division multiplexing (OFDM) symbol/subcarrier) pair, and a single-tone UL transmission is an UL transmission on the corresponding RE. In this case, a one-to-one mapping may exist between the different resources configured for the transmission of each possible Msg1 transmission and the different single-tone resources configured for the additional UL transmission. For example, for each (preamble, RO) pair available for transmission of the initial Msg1, there is a corresponding unique single-tone RE available for the transmission of a corresponding additional UL transmission. The gNB, upon receiving the initial Msg1 transmission and the corresponding additional single-tone UL transmission, may determine that the UE wishes to indicate RedCap capability as well as Msg3 repetition request. FIG. 8 shows the mapping between resources for the initial Msg1 transmission and resources for additional single-tone transmissions. The method need not be limited to a single tone and may be extended to a set of tones (e.g., two or more tones) to provide more robustness. In that case, there may be a one-to-one relationship between a Msg1 preamble and a set of tones. In some embodiments, the second transmission is sent before the UE receives Msg2. In other words, the UE may not expect to receive Msg2 before the resources for the second transmission.

As shown in FIG. 8A, in this association, each (preamble, RO) pair is associated with a unique RE in the resources allocated for single tone transmissions. If a RedCap UE wishes to indicate a Msg3 repetition request, then it transmits a single tone in the RE corresponding to the (preamble, RO) resource it has used for sending Msg1.

Using single-tone transmissions instead of preamble based transmission has the benefit of better resource utilization efficiency. A minimum PRACH configuration allocates an amount of resources for sending 64 different preambles that is 2 OFDM symbols and 6 Resource Blocks (RBs) = 144 REs; 144/64 = 2.25 REs are used per preamble-based indication. In comparison, using single-tone indication, a UE may use 1 RE per indication, achieving a 2.25 increase in resource utilization efficiency.

Several possibilities exist for the time-domain allocation of additional single-tone UL transmissions. In the case of single-tone transmissions, the configured resources for single-tone transmissions may be configured before the time at which the gNB is expected to send a corresponding Msg2, i.e., before the start of the Random Access Response (RAR) window for monitoring Msg2. In this case, the single-tone UL transmissions are not expected to be performed with Timing Advance (TA) adjustment being applied by UEs. However, by the time single-tone UL transmission is performed, a previous preamble transmission has already been performed by the UE, which the gNB may use to make an estimate for the TA value. Then, the gNB can use this value to compensate for the time misalignment of the single-tone UL transmission. In order to facilitate this operation, sufficient time may be allowed, between the preamble transmission and the corresponding single-tone UL transmission, to allow the gNB to estimate and apply the TA value.

Alternatively, the configured resources for single-tone transmissions may be configured after the time at which the gNB is guaranteed to have sent a corresponding Msg2 transmission, i.e., after the end of the RAR window for monitoring Msg2. In this case, the UEs participating in single-tone UL transmissions are all expected to have received a corresponding TA values, which they can use to adjust the UL transmission times of their respective single-tone UL transmissions. In this case, if a UE does not receive a corresponding Msg2, then (i) it may refrain from sending a corresponding single-tone UL transmission or (ii) it may continue with sending a corresponding single-tone UL transmission, but without updating the TA value.

Alternatively, the configured resources for single-tone transmissions may be configured after the time at which the gNB is expected to start sending a corresponding Msg2 and before the gNB is guaranteed to have sent it, i.e., between the start and end time of the corresponding RAR window. In this case, the UE can apply the TA value if it has received one in a corresponding Msg2. If the UE does not receive a TA value in a corresponding Msg2, then (i) it may refrain from sending a corresponding single-tone UL transmission or (ii) it may continue with sending a corresponding single-tone UL transmission, but without updating the TA value.

In order to combat high peak-to-average-power ratio (PAPR) values that can be exhibited from sending single-tone transmissions, the UE can send the UL transmission while employing discrete Fourier transform - spread OFDM (DFT-s-OFDM) transmission.

The additional UL transmission may be in the form of a sequence-based transmission, e.g., similar to PUCCH format 0 transmissions. For the transmission of PUCCH format 0 UL signals, certain resources are typically configured which can be used to simultaneously send one out of a certain number of possible sequences. In this case, a certain set of resources is configured for sending these additional sequence-based transmissions, and these resources are capable of supporting the transmission of a certain number of unique sequences. Then, a one-to-one mapping may exist between the different resources configured for the transmission of each possible Msg1 transmission and the set of configured sequences available for the additional sequence-based transmissions. For example, for each (preamble, RO) pair available for transmission of the initial Msg1, there may be a corresponding unique sequence out of the set of configured sequences that are available for the transmission of a corresponding additional sequence-based transmission. The gNB, upon receiving the initial Msg1 transmission and the corresponding additional sequence-based UL transmission, determines that the UE wishes to indicate RedCap capability as well as a Msg3 repetition request. FIG. 8B shows the mapping between Msg1 resources for initial and additional sequence-based transmissions.

Using sequence-based transmissions may have the benefit of increased resource utilization over using additional preamble transmissions. For example, if a Physical Uplink Control Channel (PUCCH) format 0 like transmission is used, then the PUCCH resource configuration allocates a minimum of 1 OFDM symbol and 1 RB for the transmission of 12 cyclic shifts, i.e., 6 different indications. Therefore, for one RO configuration with 64 preambles which occupies at least 144 REs, one needs an amount of 64/6*12 = 128 REs for allocating corresponding sequences. This achieves a 144/128 = 1.125 increase in the resource utilization efficiency. While using single-tone transmissions can achieve a better resource utilization efficiency, using sequence based transmission can be beneficial in providing transmissions with lower achievable PAPR values.

The same possibilities exist for the time-domain allocation of sequence-based UL transmissions as those described above for additional single-tone UL transmissions

When performing additional signaling for performing Msg3 repetition request/capability indication, the configuration of the RACH resources for Msg1 and the resources for the additional indication can be constructed such that the overall delay in completing the Random Access (RA) procedure is not significantly increased. On the other hand, configuring the additional resources close in time to the time resources used for corresponding Msg1 transmissions may strain the resources of the receiver, since the gNB may require some time to receive Msg1, make an estimate of the TA, and use this estimate in the receiving of the additional transmissions which do not yet have an adjusted TA. As such, these factors may be balanced when configuring the necessary resources.

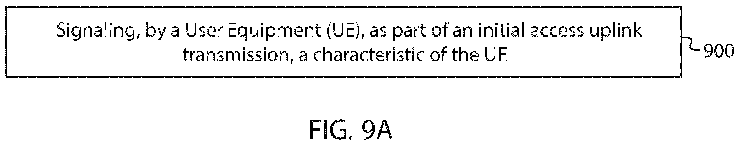

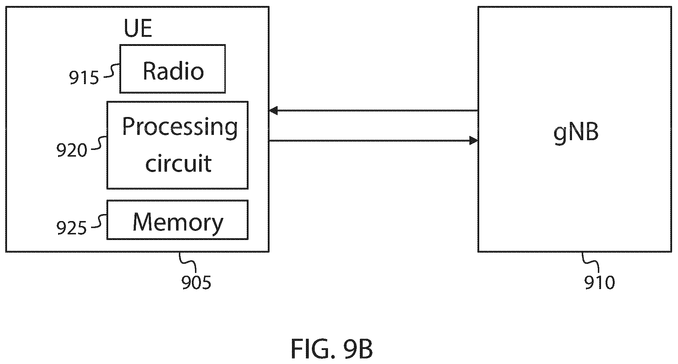

FIG. 9A shows a flowchart of a method. In some embodiments, the method includes signaling, at 900, by a User Equipment (UE), as part of an initial access uplink transmission, a characteristic of the UE; the characteristic being (i) that the UE is a reduced-capability UE, or (ii) a Msg3 repetition capability. FIG. 9B shows a system including a UE 905 and a gNB 910, in communication with each other. The UE may include a radio 915 and a processing circuit (or a means for processing) 920, which may include or be connected to a memory 925, and which may perform various methods disclosed herein, e.g., the method illustrated in FIG. 9A. For example, the processing circuit 920 may receive, via the radio 915, transmissions from the network node (gNB) 910, and the processing circuit 920 may transmit, via the radio 915, signals to the gNB 910.

As used herein, "a portion of", or a "part of" something means "at least some of" the thing, and as such may mean less than all of, or all of, the thing. As such, "a portion of" (or "part of") a thing includes the entire thing as a special case, i.e., the entire thing is an example of a portion of the thing. As used herein, when a second quantity is "within Y" of a first quantity X, it means that the second quantity is at least X-Y and the second quantity is at most X+Y. As used herein, when a second number is "within Y%" of a first number, it means that the second number is at least (1-Y/100) times the first number and the second number is at most (1+Y/100) times the first number. As used herein, the term "or" should be interpreted as "and/or", such that, for example, "A or B" means any one of "A" or "B" or "A and B".

Each of the terms "processing circuit" and "means for processing" is used herein to mean any combination of hardware, firmware, and software, employed to process data or digital signals. Processing circuit hardware may include, for example, application specific integrated circuits (ASICs), general purpose or special purpose central processing units (CPUs), digital signal processors (DSPs), graphics processing units (GPUs), and programmable logic devices such as field programmable gate arrays (FPGAs). In a processing circuit, as used herein, each function is performed either by hardware configured, i.e., hard-wired, to perform that function, or by more general-purpose hardware, such as a CPU, configured to execute instructions stored in a non-transitory storage medium. A processing circuit may be fabricated on a single printed circuit board (PCB) or distributed over several interconnected PCBs. A processing circuit may contain other processing circuits; for example, a processing circuit may include two processing circuits, an FPGA and a CPU, interconnected on a PCB.

As used herein, when a method (e.g., an adjustment) or a first quantity (e.g., a first variable) is referred to as being "based on" a second quantity (e.g., a second variable) it means that the second quantity is an input to the method or influences the first quantity, e.g., the second quantity may be an input (e.g., the only input, or one of several inputs) to a function that calculates the first quantity, or the first quantity may be equal to the second quantity, or the first quantity may be the same as (e.g., stored at the same location or locations in memory as) the second quantity.

It will be understood that, although the terms "first", "second", "third", etc., may be used herein to describe various elements, components, regions, layers and/or sections, these elements, components, regions, layers and/or sections should not be limited by these terms. These terms are only used to distinguish one element, component, region, layer or section from another element, component, region, layer or section. Thus, a first element, component, region, layer or section discussed herein could be termed a second element, component, region, layer or section.

As used herein, the singular forms "a" and "an" are intended to include the plural forms as well, unless the context clearly indicates otherwise. It will be further understood that the terms "comprises" and/or "comprising", when used in this specification, specify the presence of stated features, integers, steps, operations, elements, and/or components, but do not preclude the presence or addition of one or more other features, integers, steps, operations, elements, components, and/or groups thereof. As used herein, the term "and/or" includes any and all combinations of one or more of the associated listed items. Expressions such as "at least one of," when preceding a list of elements, modify the entire list of elements and do not modify the individual elements of the list. Further, the use of "may" when describing embodiments of the inventive concept refers to "one or more embodiments of the present disclosure". Also, the term "exemplary" is intended to refer to an example or illustration. As used herein, the terms "use," "using," and "used" may be considered synonymous with the terms "utilize," "utilizing," and "utilized," respectively.

Any numerical range recited herein is intended to include all sub-ranges of the same numerical precision subsumed within the recited range. For example, a range of "1.0 to 10.0" or "between 1.0 and 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Similarly, a range described as "within 35% of 10" is intended to include all subranges between (and including) the recited minimum value of 6.5 (i.e., (1 - 35/100) times 10) and the recited maximum value of 13.5 (i.e., (1 + 35/100) times 10), that is, having a minimum value equal to or greater than 6.5 and a maximum value equal to or less than 13.5, such as, for example, 7.4 to 10.6. Any maximum numerical limitation recited herein is intended to include all lower numerical limitations subsumed therein and any minimum numerical limitation recited in this specification is intended to include all higher numerical limitations subsumed therein.

## Claims

1. A method, comprising:
indicating (900), by a User Equipment, UE (905), as part of an initial access uplink transmission, a characteristic of the UE (905), the characteristic including at least one of the following:
the UE (905) is a reduced-capability UE and has a Msg3 repetition capability corresponding to a first set (Set A) of non-overlapping Msg1 resources,
the UE (905) is a reduced-capability UE and lacks a Msg3 repetition capability corresponding to a second set (Set B) of the non-overlapping Msg1 resources,
the UE (905) is not a reduced-capability UE and has a Msg3 repetition capability corresponding to a third set (Set C) of the non-overlapping Msg1 resources, and
the UE (905) is not a reduced-capability UE and lacks a Msg3 repetition capability corresponding to a fourth set (Set D) of the non-overlapping Msg1 resources,
wherein the indicating (900) is performed using separate preambles in a same Random Access Channel, RACH, Occasion, RO.

2. The method of claim 1, wherein the indicating comprises indicating the characteristic implicitly.

3. The method of claim 2, wherein the indicating comprises sending a preamble in a Random Access Channel, RACH, Occasion, RO, the RO corresponding to the characteristic.

4. The method of claim 2, wherein the indicating comprises sending a preamble in a Random Access Channel, RACH Occasion, RO, the preamble corresponding to the characteristic.

5. The method of claim 2, wherein the indicating comprises sending a preamble in a Random Access Channel, RACH Occasion, RO, the combination of the preamble and the RO corresponding to the characteristic.

6. The method of claim 1, comprising sending a first preamble in a Msg1 transmitted in a first Random Access Channel, RACH Occasion, RO, wherein the indicating of the characteristic comprises indicating the characteristic explicitly.

7. The method of claim 6, wherein the indicating comprises sending a second preamble, after sending the first preamble.

8. The method of claim 7, wherein the indicating comprises sending the second preamble in a second RO corresponding to the first RO.

9. The method of any one of claims 6 to 8, wherein the indicating comprises sending a first unmodulated signal occupying a first resource element, after sending the first preamble.

10. The method of claim 9, wherein the indicating further comprises sending a second unmodulated signal occupying a second resource element, after sending the first unmodulated signal.

11. The method of any one of claims 6 to 10, wherein the indicating comprises sending a sequence-based transmission, after sending the first preamble.

12. A User Equipment, UE (905), comprising:
a processing circuit (920); and
a memory (925), operatively connected to the processing circuit (920) and storing instructions that, when executed by the processing circuit (920), cause the UE (905) to perform the method according to any one of claims 1 to 11.

## Patentansprüche

1. Verfahren, umfassend:
Anzeigen (900), durch ein User Equipment, UE (905), als Teil einer Initialzugriffs-Uplink-Übertragung, eines Merkmals des UE (905), wobei das Merkmal mindestens eines der folgenden umfasst:
das UE (905) ist ein UE mit reduzierter Fähigkeit und weist eine Msg3-Wiederholungsfähigkeit auf, die einem ersten Satz (Set A) von nicht überlappenden Msg1-Ressourcen entspricht,
das UE (905) ist ein UE mit reduzierter Fähigkeit und weist keine Msg3-Wiederholungsfähigkeit auf, die einem zweiten Satz (Set B) von den nicht überlappenden Msg1-Ressourcen entspricht,
das UE (905) ist kein UE mit reduzierter Fähigkeit und weist eine Msg3-Wiederholungsfähigkeit auf, die einem dritten Satz (Set C) von den nicht überlappenden Msg1-Ressourcen entspricht, und
das UE (905) ist kein UE mit reduzierter Fähigkeit und weist keine Msg3-Wiederholungsfähigkeit auf, die einem vierten Satz (Set D) von den nicht überlappenden Msg1-Ressourcen entspricht,
wobei das Anzeigen (900) unter Verwendung getrennter Präambeln in derselben Random Access Channel (RACH) Occasion (RO) durchgeführt wird.

2. Verfahren gemäß Anspruch 1, wobei das Anzeigen das implizite Anzeigen des Merkmals umfasst.

3. Verfahren gemäß Anspruch 2, wobei das Anzeigen das Senden einer Präambel in einer Random Access Channel (RACH) Occasion (RO) umfasst, wobei die RO dem Merkmal entspricht.

4. Verfahren gemäß Anspruch 2, wobei das Anzeigen das Senden einer Präambel in einer Random Access Channel (RACH) Occasion (RO) umfasst, wobei die Präambel dem Merkmal entspricht.

5. Verfahren gemäß Anspruch 2, wobei das Anzeigen das Senden einer Präambel in einer Random Access Channel (RACH) Occasion (RO) umfasst, wobei die Kombination aus der Präambel und der RO dem Merkmal entspricht.

6. Verfahren gemäß Anspruch 1, umfassend das Senden einer ersten Präambel in einer Msg1, die in einer ersten Random Access Channel (RACH) Occasion (RO) übertragen wird, wobei das Anzeigen des Merkmals das explizite Anzeigen des Merkmals umfasst.

7. Verfahren gemäß Anspruch 6, wobei das Anzeigen das Senden einer zweiten Präambel nach dem Senden der ersten Präambel umfasst.

8. Verfahren gemäß Anspruch 7, wobei das Anzeigen das Senden der zweiten Präambel in einer zweiten RO umfasst, die der ersten RO entspricht.

9. Verfahren gemäß einem der Ansprüche 6 bis 8, wobei das Anzeigen das Senden eines ersten unmodulierten Signals, das ein erstes Ressourcenelement belegt, nach dem Senden der ersten Präambel umfasst.

10. Verfahren gemäß Anspruch 9, wobei das Anzeigen ferner das Senden eines zweiten unmodulierten Signals, das ein zweites Ressourcenelement belegt, nach dem Senden des ersten unmodulierten Signals umfasst.

11. Verfahren gemäß einem der Ansprüche 6 bis 10, wobei das Anzeigen das Senden einer sequenzbasierten Übertragung nach dem Senden der ersten Präambel umfasst.

12. User Equipment, UE (905), umfassend:
eine Verarbeitungsschaltung (920); und
einen Speicher (925), der funktionsmäßig mit der Verarbeitungsschaltung (920) verbunden ist und Anweisungen speichert, die, wenn sie durch die Verarbeitungsschaltung (920) ausgeführt werden, das UE (905) veranlassen, das Verfahren gemäß einem der Ansprüche 1 bis 11 auszuführen.

## Revendications

1. Procédé, comprenant :
l'indication (900), par un équipement utilisateur, UE (905), en tant que partie d'une transmission montante d'accès initial, d'une caractéristique de l'UE (905), la caractéristique comprenant au moins un des éléments suivants :
l'UE (905) est un UE à capacité réduite et possède une capacité de répétition Msg3 correspondant à un premier ensemble (Set A) de ressources Msg1 non superposées,
l'UE (905) est un UE à capacité réduite et ne possède pas de capacité de répétition Msg3 correspondant à un deuxième ensemble (Set B) de ressources Msg1 non superposées,
l'UE (905) n'est pas un UE à capacité réduite et possède une capacité de répétition Msg3 correspondant à un troisième ensemble (Set C) de ressources Msg1 non superposées, et
l'UE (905) n'est pas un UE à capacité réduite et ne possède pas de capacité de répétition Msg3 correspondant à un quatrième ensemble (Set D) de ressources Msg1 non superposées,
dans lequel l'indication (900) est effectuée au moyen de préambules distincts dans une même occasion de canal d'accès aléatoire (Random Access Channel Occasion)

2. Procédé selon la revendication 1, dans lequel l'indication comprend l'indication implicite de la caractéristique.

3. Procédé selon la revendication 2, dans lequel l'indication comprend l'envoi d'un préambule dans une occasion de canal d'accès aléatoire, l'occasion de canal d'accès aléatoire correspondant à la caractéristique.

4. Procédé selon la revendication 2, dans lequel l'indication comprend l'envoi d'un préambule dans une occasion de canal d'accès aléatoire, le préambule correspondant à la caractéristique.

5. Procédé selon la revendication 2, dans lequel l'indication comprend l'envoi d'un préambule dans une occasion de canal d'accès aléatoire, la combinaison du préambule et de l'occasion de canal d'accès aléatoire correspondant à la caractéristique.

6. Procédé selon la revendication 1, comprenant l'envoi d'un premier préambule dans un Msg1 transmis dans une première occasion de canal d'accès aléatoire, dans lequel l'indication de la caractéristique comprend l'indication explicite de la caractéristique.

7. Procédé selon la revendication 6, dans lequel l'indication comprend l'envoi d'un second préambule après l'envoi du premier préambule.

8. Procédé selon la revendication 7, dans lequel l'indication comprend l'envoi du second préambule dans une seconde occasion de canal d'accès aléatoire correspondant à la première occasion de canal d'accès aléatoire.

9. Procédé selon l'une quelconque des revendications 6 à 8, dans lequel l'indication comprend l'envoi d'un premier signal non modulé occupant un premier élément de ressource après l'envoi du premier préambule.

10. Procédé selon la revendication 9, dans lequel l'indication comprend en outre l'envoi d'un second signal non modulé occupant un second élément de ressource après l'envoi du premier signal non modulé.

11. Procédé selon l'une quelconque des revendications 6 à 10, dans lequel l'indication comprend l'envoi d'une transmission basée sur une séquence après l'envoi du premier préambule.

12. Équipement utilisateur, UE, (905), comprenant :
un circuit de traitement (920) ; et
une mémoire (925) reliée de manière opérative au circuit de traitement (920) et stockant des instructions qui, lorsqu'elles sont exécutées par le circuit de traitement (920), amènent l'UE (905) à exécuter le procédé selon l'une quelconque des revendications 1 à 11.
